# EUROPEAN PATENT APPLICATION

(11) **EP 2 623 578 A1**
(43) Date of publication of application: **07.08.2013**
(21) Application number: 11306653.4
(22) Date of filing: 13.12.2011
(51) Int. Cl.: C09K 8/467, C04B 16/04, C04B 28/02, E21B 33/14

(54) **Compositions and methods for reducing torque during well cementing**

(71) Applicant: Services Pétroliers Schlumberger, 75007 Paris (FR); Schlumberger Technology B.V., 2514 The Hague (NL); Schlumberger Holdings Limited, Tortola (VG); PRAD Research and Development, Tortola (VG)
(72) Inventor: James, Simon, 92142 Clamart (FR); lidia, Gorokhova, 92142 Clamart (FR)
(74) Representative: Vandermolen, Mathieu

(57) **Abstract**

Cement compositions comprising an inorganic cement, water, polymer particles and a water immiscible fluid are useful for reducing the torque necessary to rotate casing during a cementing operation. Such casing movement promotes efficient removal of drilling fluid from the annulus between the casing and the formation or the casing and another casing string. The compositions are particularly useful for cementing operations involving deviated and horizontal wells.

## Description

### BACKGROUND

The statements in this section merely provide background information related to the present disclosure and may not constitute prior art.

After a well has been drilled, the conventional practice in the oil industry consists of lining the well with a metal casing. An annular volume is thus formed between the casing and the formation. A cementing operation is then conducted in order to fill the annular volume with cement. The combination of cement and casing strengthens the wellbore and facilitates the isolation of certain areas of the formation behind the casing for the production of hydrocarbons.

Primary cementing, usually consists of pumping cement slurry down the casing interior. When the cement slurry exits the casing, it enters and fills the annulus. Some operators have pumped cement slurry in the opposite direction-down the annulus-in a process called reverse cementing.

Before the cementing process begins, the wellbore is usually filled with drilling fluid. A successful primary cementing operation requires that the drilling fluid be effectively removed from the annulus, giving the cement slurry intimate contact with both the casing and formation surfaces, and promoting intimate bonding throughout both interfaces.

Decades of primary cementing experience have resulted in the development of procedural recommendations that are widely accepted by well operators. The recommendations are collectively called "good cementing practices." These practices address wellbore geometry, casing centralization, mud conditioning prior to the cementing operation, use of chemical washes and spacer fluids, and the use of casing hardware. Detailed information about good cementing practices may be found in the following publication: Daccord G, Guillot D and Nilsson F: "Mud Removal," in Nelson EB and Guillot D (eds.): Well Cementing-2nd Edition, Houston, Schlumberger (2006) 143-189.

In addition to the aforementioned recommendations, good cementing practices also address movement of the casing during mud conditioning and the cementing operation. The movement may be casing rotation, casing reciprocation or both. Rotation is particularly useful, especially in highly deviated or horizontal wells in which drilling-fluid removal is particularly difficult. These wells are frequently drilled with non-aqueous drilling fluids that have fairly low coefficients of friction, allowing easier casing rotation. However, subsequent spacer fluid and particularly cement slurries have high friction coefficients; consequently, when these fluids are in the annulus, casing rotation may no longer be possible because of the torque limit of the rig equipment. Therefore, it would be beneficial to provide cement slurries with reduced friction coefficients.

### SUMMARY

In an aspect, embodiments relate to compositions with reduced friction coefficients, promoting easier casing rotation during a well cementing operation. The compositions comprise an inorganic cement, water, polymer particles and a water immiscible fluid. The polymer particles, which preferably have a modulus of elasticity higher than about 500 MPa, may comprise one or more polyolefins. The water immiscible fluid may comprise (but would not be limited to) mineral oil, synthetic hydrocarbons, crude oil or combinations thereof.

In a further aspect, embodiments relate to methods for cementing a subterranean well. A numerical simulator is applied to determine the maximum allowable cement-slurry friction coefficient to maintain casing-rotation torque within acceptable limits for a particular well geometry and available surface equipment. The simulator analyzes the contact points between the casing and the wellbore, and the contact forces are used to compute rotational friction forces.

A candidate composition is provided that comprises an inorganic cement, water, polymer particles and a water immiscible fluid, thereby forming a slurry. The friction coefficient of the slurry is measured. If the casing-rotation torque is acceptable, the composition is placed in an annulus between a tubular string and the borehole wall, or an annulus between two tubular strings. If not, the composition is modified, and the friction-coefficient and casing-rotation torque are reevaluated. This process is repeated until a suitable composition is identified.

In yet a further aspect, embodiments relate to methods for reducing casing-rotation torque during the cementation of a subterranean well. A numerical simulator is applied to determine the maximum allowable cement-slurry friction coefficient to maintain casing-rotation torque within acceptable limits for a particular well geometry and available surface equipment. The simulator analyzes the contact points between the casing and the wellbore, and the contact forces are used to compute rotational friction forces.

A candidate composition is provided that comprises an inorganic cement, water, polymer particles and a water immiscible fluid, thereby forming a slurry. The friction coefficient of the slurry is measured. If the casing-rotation torque is acceptable, the composition is placed in an annulus between a tubular string and the borehole wall, or an annulus between two tubular strings. If not, the composition is modified, and the friction-coefficient and casing-rotation torque are reevaluated. This process is repeated until a suitable composition is identified.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

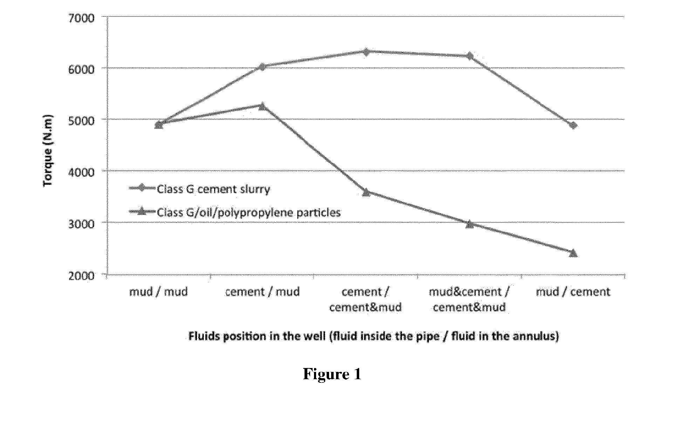

Figure 1 shows the results of casing-rotation torque simulations.

### DETAILED DESCRIPTION

At the outset, it should be noted that in the development of any such actual embodiment, numerous implementation-specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. The description and examples are presented solely for the purpose of illustrating the preferred embodiments and should not be construed as a limitation to the scope and applicability of the disclosed embodiments. While the compositions of the present disclosure are described herein as comprising certain materials, it should be understood that the composition could optionally comprise two or more chemically different materials. In addition, the composition can also comprise some components other than the ones already cited.

The Applicants have determined that the friction coefficient of a cement slurry may be significantly reduced by incorporating a water immiscible fluid and polymer particles in the composition.

In an aspect, embodiments relate to compositions. The compositions comprise an inorganic cement, water, polymer particles and a water immiscible fluid.

The cement may comprise Portland cement, calcium aluminate cement, fly ash, blast furnace slag, lime/silica blends, cement kiln dust, magnesium oxychloride, chemically bonded phosphate ceramics, zeolites or geopolymers, and combinations thereof. Of these, Portland cement is preferred.

The polymer particles preferably have a modulus of elasticity higher than about 500 MPa. The median particle size of the particles is preferably between about 75 µm and 500 µm, and more preferably between about 300 µm and 500 µm. It is also preferred that no more than 10% of the particles be smaller than about 35 µm, and that no more than 10 vol% of the particles be larger than about 900 µm. The polymer-particle concentration is preferably between about 1% and 15% by weight of cement, and more preferably between about 5% and 15%. The friction coefficient of the composition is preferably lower than about 0.25.

Preferred water immiscible fluids include (but are not limited to) mineral oils, synthetic hydrocarbons and/or crude oil. The polymer beads preferably comprise (but are not limited to) one or more polyolefins. Polypropylene and/or polyethylene are the more preferred polyolefins. The water-immiscible-fluid concentration in the slurry is preferably between about 5% and about 50% by volume of water, and more preferably between about 10% and about 30% by volume of water.

In a further aspect, embodiments relate to methods for cementing a subterranean well having a borehole.

A numerical simulator may be applied to determine the maximum allowable cement-slurry friction coefficient to maintain casing-rotation torque within acceptable limits for a particular well geometry and available surface equipment. The simulator analyzes the contact points between the casing and the wellbore, and the contact forces are used to compute rotational friction forces. The numerical simulator may be based on a finite-element method described in the following publication: Przemieniecki JS: Theory of matrix structural analysis, New York, McGraw-Hill, 1968.

A candidate composition may then be provided; said composition comprises an inorganic cement, water, polymer particles and a water immiscible fluid, thereby forming a slurry. The friction coefficient of the slurry is measured. If the casing-rotation torque is acceptable, the composition may be placed in an annulus between a tubular string and the borehole wall, or an annulus between two tubular strings. If not, the composition may be modified, and the friction-coefficient and casing-rotation torque are reevaluated. This process may be repeated until a suitable composition is identified.

Within the spirit of the methods, the Applicants envision that a database of friction coefficients for slurry formulations could be generated in advance of a cementing operation and, depending on the maximum allowable friction coefficient for a particular wellbore scenario, an appropriate slurry formulation could be chosen from the database.

The cement may comprise Portland cement, calcium aluminate cement, fly ash, blast furnace slag, lime/silica blends, cement kiln dust, magnesium oxychloride, chemically bonded phosphate ceramics, zelites or geopolymers, and combinations thereof. Of these, Portland cement is preferred.

The polymer particles preferably have a modulus of elasticity higher than about 500 MPa. The median particle size of the particles is preferably between about 75 µm and 500 µm, and more preferably between about 300 µm and 500 µm. It is also preferred that no more than 10% of the particles be smaller than about 35 µm, and that no more than 10 vol% of the particles be larger than about 900 µm. The polymer-particle concentration is preferably between about 1% and 15% by weight of cement, and more preferably between about 5% and 15%.

Preferred water immiscible fluids include (but are not limited to) mineral oils, synthetic hydrocarbons and/or crude oil. The polymer beads preferably comprise (but are not limited to) one or more polyolefins. Polypropylene and/or polyethylene are the more preferred polyolefins. The water-immiscible-fluid concentration in the slurry is preferably between about 5% and about 50% by volume of water, and more preferably between about 10% and about 30% by volume of water.

In yet a further aspect, embodiments relate to methods for reducing casing-rotation torque during the cementation of a subterranean well having a borehole.

A numerical simulator may be applied to determine the maximum allowable cement-slurry friction coefficient to maintain casing-rotation torque within acceptable limits for a particular well geometry and available surface equipment. The simulator analyzes the contact points between the casing and the wellbore, and the contact forces are used to compute rotational friction forces. The numerical simulator may be based on a finite-element method described in the following publication: Przemieniecki JS: Theory of matrix structural analysis, New York, McGraw-Hill, 1968.

A candidate composition may then be provided that comprises an inorganic cement, water, polymer particles and a water immiscible fluid, thereby forming a slurry. The friction coefficient of the slurry is measured. If the casing-rotation torque is acceptable, the composition may be placed in an annulus between a tubular string and the borehole wall, or an annulus between two tubular strings. If not, the composition may be modified, and the friction-coefficient and casing-rotation torque are reevaluated. This process is repeated until a suitable composition is identified.

The cement may comprise Portland cement, calcium aluminate cement, fly ash, blast furnace slag, lime/silica blends, cement kiln dust, magnesium oxychloride, chemically bonded phosphate ceramics, zeolites or geopolymers, and combinations thereof. Of these, Portland cement is preferred.

The polymer particles preferably have a modulus of elasticity higher than about 500 MPa. The median particle size of the particles is preferably between about 75 µm and 500 µm, and more preferably between about 300 µm and 500 µm. It is also preferred that no more than 10% of the particles be smaller than about 35 µm, and that no more than 10 vol% of the particles be larger than about 900 µm. The polymer-particle concentration is preferably between about 1% and 15% by weight of cement, and more preferably between about 5% and 15%.

Preferred water immiscible fluids include (but are not limited to) mineral oils, synthetic hydrocarbons and/or crude oil. The polymer beads preferably comprise (but are not limited to) one or more polyolefins. Polypropylene and/or polyethylene are the more preferred polyolefins. The water-immiscible-fluid concentration in the slurry is preferably between about 5% and about 50% by volume of water, and more preferably between about 10% and about 30% by volume of water.

### EXAMPLES

The following examples serve to further illustrate the disclosure.

### EXAMPLE 1

Experiments were performed to determine whether it would be possible to decrease the friction coefficient of cement slurries. Tests were performed using the OFITE EP (extreme pressure) lubricity tester, available from OFITE, Houston, Texas, USA. This equipment consists of a rotating metal ring that rubs against a hardened steel block at a given normal force, with the entire assembly submerged in test fluid (water, drilling fluid, spacer or cement). The equipment is designed to indicate the friction coefficient when a torque of 16.9 N.m (150 lbf-in.) is applied to the steel block giving a normal force of 4.1 MPa (600 psi). The instrument replicates, within certain limitations, the friction between rotating pipe and casing.

Initial tests were performed with distilled water (calibration fluid), an non-aqueous drilling fluid (1500 kg m⁻³, 75:25 oil:water ratio) and three Class G cement slurries prepared according to recommended procedures described in the following publication: *Petroleum and Natural Gas Industries-Cements and Materials for Well Cementing-Part 2: Testing of Well Cements,* International Organization for Standards Publication ISO 10426-2.

The Class G slurries were: (1) neat cement slurry prepared at a solid volume fraction (SVF) of 41.5%; (2) the same slurry with an additional 100g of a styrene-butadiene latex added after formulation and initial testing on the lubricity tester; (3) a system at 40.7% SVF containing 10% polypropylene particles by weight of cement (BWOC) (Icorene™ 9013 P from ICO Polymers), 116 L/tonne mineral oil (Exxsol™ D100 from ExxonMobil Chemical), 10.5 L/tonne of a surfactant (GT2624 from Akzo Nobel), 2.7 L/tonne of a silicone antifoam agent, 0.6% BWOC of a biopolymer based antisettling agent and 6.7 L/tonne of a polynapthalene sulfonate dispersant. The results of the measurements are shown in Table 1. The system containing oil and polymer particles had a friction coefficient significantly lower than the oil-base drilling fluid.

**Table 1. Initial lubricity results.**

| **Fluid** | **Friction coefficient** |
|---|---|
| Distilled water | 0.33 |
| Non-aqueous drilling fluid | 0.22 |
| Class G cement slurry (41.5% SVF) (System 1) | 0.31 |
| Class G cement slurry (35.5% SVF) + latex (System 2) | 0.35 |
| Class G/oil/polypropylene particles system (System 3) | 0.12 |

### EXAMPLE 2

The five systems shown in Table 2 were formulated and tested to evaluate the effect of polymer particles, and a combination of polymer particles and oil, on the friction coefficients. For systems containing oil, the surfactant (GT2624) was added at 9% by volume of oil. The systems were mixed according to the procedure in ISO 10426-2, except for the systems containing oil. For the oil-containing systems, following a 5-min hydration period for the antisettling agent and subsequent addition of the liquid additives (except oil), the blender speed was reduced to 1000 RPM and the mineral oil was added over 15s. The blender speed was then increased to 4000 RPM and the cement or blend added conventionally. The fluid-loss-control agent was UNIFLAC™, available from Schlumberger.

**Table 2. Slurry designs formulated for second set of lubricity tests. BVOB = by volume of blend; BWOC = by weight of cement; BWOB = by weight of blend.**

| | **A** | **B** | **C** | **E** | **F** |
|---|---|---|---|---|---|
| SVF | 59% | 59% | 59% | 40.5% | 40.5% |
| Class G | 35% BVOB | 35% BVOB | 35% BVOB | 100% BWOC | 100% BWOC |
| Acrylonitrile-butadiene particles | 50% BVOB | - | - | - | - |
| Polypropylene particles | - | 50% BVOB | - | - | 10% BWOC |
| Uintaite particles | - | - | 50% BVOB | - | - |
| Fine silica | 15% BVOB | 15% BVOB | 15% BVOB | - | - |
| | | | | | |
| Exxsol D100 | - | - | - | 108.5 L/tonne | 116 L/tonne |
| GT2624 | - | - | - | 9.9 L/tonne | 10.5 L/tonne |
| Silicone antifoam | 2 L/tonne | 2 L/tonne | 2 L/tonne | 2.7 L/tonne | 2.7 L/tonne |
| Antisettling agent | 0.2% BWOB | 0.2% BWOB | 0.2% BWOB | 0.4% BWOC | 0.4 % BWOC |
| Dispersant | 4 L/tonne | 4 L/tonne | 4 L/tonne | 6.7 L/tonne | 6.7 L/tonne |
| Fluid loss control agent | 0.2% BWOB | 0.2% BWOB | 0.2% BWOB | - | - |

The results of the lubricity tests are shown in Table 3.

**Table 3. Results of second series of lubricity tests.**

| System | Friction coefficient |
|---|---|
| A | 0.5 |
| B | 0.30 to 0.33 |
| C | 0.4 |
| E | 0.27 |
| F | 0.12 |

### EXAMPLE 3

A third series of lubricity tests was performed to evaluate the effects of changing the polymer particle concentration and type, and the oil content. The designs were all mixed at 40.5% SVF with the slurry-additive (antifoam, dispersant, anti-settling agent) concentrations the same as in Design F. Surfactant GT2624 was added at 9% by volume of oil. The other details of the designs and the results are shown in Table 4. The acrylonitrile-butadiene particles were Chemigum™ P86F from Eliokem. HDPE was high-density polyethylene (Icoflo™ HD from IcoPolymers).

**Table 4. Formulations and results from third series of lubricity tests. BVOW = by volume of water.**

| | Polypropylene | Acrylonitrile-butadiene | HDPE | Ground Car Tire Rubber | Exxsol™ D100 | | Coefficient of friction |
|---|---|---|---|---|---|---|---|
| System | % BWOC | % BWOC | % BWOC | % BWOC | L/tonne | %BVOW | |
| G | 10 | - | - | | 112.3 | 20 | 0.11 |
| H | - | 10 | - | | 111.3 | 20 | 0.30 to 0.32 |
| I | - | - | 10 | | 110.8 | 20 | 0.16 to 0.17 |
| J | 10 | - | - | | 168.4 | 30 | 0.13 to 0.14 |
| K | 10 | - | - | | 55.6 | 10 | 0.15 to 0.16 |
| L | 5 | - | - | | 102.1 | 20 | 0.12 |
| M | 15 | - | - | | 120.6 | 20 | 0.11 |
| N | 10 | - | - | | - | - | 0.19 |
| P | | | | 10 | 111.3 | 20 | 0.31 |

### EXAMPLE 4

Torque simulations for various fluid positions were performed for a 5-in. (12.7-cm) casing in a horizontal wellbore. Various parameters used in the simulation are detailed in Table 5. The results are shown in Figure 1.

When the conventional cement slurry starts filling the annular space, the torque increases due to the high cement slurry friction coefficient. Whereas, with the oil-and-polypropylene cement system, the torque decreases due to the enhanced cement slurry lubricity. When displacement of the cement slurry by the drilling mud begins, the rotational torque of the casing is reduced by more than 50%.

**Table 5. Torque simulation parameters.**

| Well trajectory: | | |
|---|---|---|
| MD (m) | Inclination (deg) | Azimuth (deg) |
| 0 | 0 | 0 |
| 1,000 | 90 | 0 |
| 2,000 | 90 | 0 |

| Fluid information: | | |
|---|---|---|
| Drilling mud | Class G cement slurry | Class G / oil / polypropylene particles system |
| Density: 1,500 kg/m³ | Density: 1,890 kg/m³ | Density: 1,625 kg/m³ |
| Friction coefficient: 0.22 | Friction coefficient: 0.31 | Friction coefficient: 0.12 |

| Casing pipe data: | | |
|---|---|---|
| OD (in. [cm]) | ID (in. [cm]) | Linear mass (lbm/ft [kg/m]) |
| 5.5 [14.0] | 4.892 [12.43] | 17 [25.3] |

Although only a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

## Claims

1. A composition, comprising an inorganic cement, water, polymer particles and a water immiscible fluid, wherein the modulus of elasticity of the polymer particles is above about 500 MPa, and the friction coefficient of the composition is lower than about 0.25.

2. The composition of claim 1, wherein the water immiscible fluid comprises mineral oil, synthetic hydrocarbons or crude oil and mixtures thereof.

3. The composition of any one of claims 1 or 2, wherein the polymer particles comprise one or more polyolefins.

4. The composition of any one of claims 1-3, wherein the median particle size of the particles is between about 75 µm and 500 µm.

5. The composition of any one of claims 1-4, wherein the particle concentration is between about 1% and about 15% by weight of cement.

6. The composition of any one of claims 1-5, wherein the water-immiscible-fluid concentration is between about 5% and about 50% by volume of water.

7. The composiiton of any one of claims 1-6, wherein the inorganic cement comprises Portland cement, calcium aluminate cement, fly ash, blast furnace slag, lime/silica blends, cement kiln dust, magnesium oxychloride, chemically bonded phosphate ceramics, zeolites or geopolymers, and combinations thereof.

8. A method for cementing a subterranean well having a borehole, comprising
(i) using a numerical simulator to determine the maximum friction coefficient possible to maintain casing-rotation torque within acceptable limits;
(ii) providing a candidate composition comprising an inorganic cement, water, polymer particles and a water immiscible fluid, thereby forming a slurry;
(iii) measuring the friction coefficient of the composition;
(iv) if the casing-rotation torque is acceptable, proceed to step (v); if the casing-rotation torque is not acceptable, the composition is modified and steps (ii) and (iii) are repeated; and
(v) placing the composition in an annulus between a tubular string and the borehole wall, or an annulus between two tubular strings.

9. A method for reducing casing-rotation torque during the cementation of a subterranean well having a borehole, comprising:
(i) providing a composition comprising an inorganic cement, water, polymer particles and a water immiscible fluid, thereby forming a slurry; and
(ii) placing the composition in an annulus between a tubular string and the borehole wall, or an annulus between two tubular strings.

10. The method of claim 8 or 9, wherein the water immiscible fluid comprises mineral oil, synthetic hydrocarbons or crude oil and mixtures thereof.

11. The method of any one of claims 8-10, wherein the modulus of elasticity of the polymer particles is above about 500 MPa.

12. The method of any one of claims 8-11, wherein the polymer particles comprise one or more polyolefins.

13. The method of any one of claims 8-12, wherein the median particle size of the particles is between about 75 µm and 500 µm.

14. The method of any one of claims 8-13, wherein the particle concentration is between about 1% and about 15% by weight of cement.

15. The method of any one of claims 8-14, wherein the water-immiscible-fluid concentration is between about 5% and about 50% by volume of water.
